# EUROPÄISCHE PATENTSCHRIFT

(11) **EP 3 489 507 B1**
(45) Veröffentlichungstag und Bekanntmachung des Hinweises auf die Patenterteilung: **26.04.2023**
(21) Anmeldenummer: 17204162.6
(22) Anmeldetag: 28.11.2017
(51) Int. Cl.: F03D 7/02

(54) **VERFAHREN UND VORRICHTUNG ZUM BETREIBEN EINER WINDENERGIEANLAGE**
METHOD AND DEVICE FOR OPERATING A WIND ENERGY PLANT
PROCÉDÉ ET DISPOSITIF DESTINÉS AU FONCTIONNEMENT D'UNE ÉOLIENNE

(43) Veröffentlichungstag der Anmeldung: 29.05.2019
(73) Patentinhaber: Nordex Energy SE & Co. KG, 22419 Hamburg (DE)
(72) Erfinder: Niss, Michael, 9510 Arden (DK); Buller, Valeri, 22299 Hamburg (DE)
(74) Vertreter: Epping - Hermann - Fischer

(56) Entgegenhaltungen:
- US-A1- 2015 233 349
- US-B2- 9 739 264

## Beschreibung

Die Erfindung betrifft ein Verfahren zum Betreiben einer Windenergieanlage, insbesondere einer drehzahlvariablen Windenergieanlage bei hohen Windgeschwindigkeiten. Weiterhin betrifft die Erfindung eine Vorrichtung für eine Windenergieanlage, die eingerichtet ist, das Verfahren auszuführen, insbesondere für eine drehzahlvariable Windenergieanlage.

Windenergieanlagen werden verwendet, um die in der einen Rotor der Anlage anströmenden Luft enthaltene kinetische Energie in elektrische Energie umzuwandeln. Heutige Windenergieanlagen sind in der Regel drehzahlvariabel, wobei die Drehzahl des Rotors über den Rotorblattstellwinkel wenigstens eines Rotorblattes des Rotors sowie über das auf den Rotor wirkendende generatorische Moment eines Generators der Windenergieanlage eingestellt werden kann. Zu hohe Windgeschwindigkeiten können eine Windenergieanlage beschädigen, wenn diese nicht rechtzeitig in ihrer Leistungsabgabe und Drehzahl begrenzt wird. Hierzu werden ab einer unteren Grenzwindgeschwindigkeit beispielsweise die Rotorblätter so verdreht, dass der Rotor der Windenergieanlage weniger Leistung aus dem anströmenden Wind aufnimmt und sich die Drehzahl des Rotors reduziert. Ab einer oberen Grenzwindgeschwindigkeit kann für eine Windenergieanlage ein lastfreier Betrieb vorgesehen sein, bei dem der Rotor der Windenergieanlage ohne generatorisches Moment und bei vergleichsweise geringen Drehzahlen frei rotieren kann oder der Rotor der Windenergieanlage in eine Parkposition bewegt wird. In dem lastfreien Betrieb wandelt die Windenergieanlage keine kinetische Energie in elektrische Energie um.

Um den jährlichen Energieertrag von Windenergieanlagen zu erhöhen, ist wünschenswert, ein Verfahren sowie eine Vorrichtung zum Betreiben einer Windenergieanlage anzugeben, das bzw. die einen verlässlichen Betrieb bei einer im Hinblick auf die zulässigen Betriebslasten maximalen Leistungsabgabe auch bei hohen Windgeschwindigkeiten ermöglicht.

Die WO 97/09531 A1 betrifft ein Verfahren zum Betreiben einer Windenergieanlage, insbesondere zur Begrenzung der Belastung einer Windenergieanlage, vorzugsweise einer pitchgeregelten Windenergieanlage. Die Belastung der Windenergieanlage bei höheren Windgeschwindigkeiten soll begrenzt werden. Dies wird dadurch gelöst, dass die Leistung der Windenergieanlage windgeschwindigkeitsabhängig ab einer vorbestimmbaren Windgeschwindigkeit vermindert wird, indem die Drehzahl des Rotors der Windenergieanlage bei Auftreten eines Windes mit einer Windgeschwindigkeit oberhalb einer Grenzwindgeschwindigkeit reduziert wird.

Die DE 10 2015 203 841 A1 betrifft ein Verfahren zum Betreiben einer Windenergieanlage, bei dem die Drehzahl und die Leistung der Windenergieanlage reduziert werden, wenn die vorherrschende Windgeschwindigkeit einen vorgegebenen ersten Grenzwert überschreitet. Die Drehzahl und die Leistung werden mit weiter ansteigender Windgeschwindigkeit weiter reduziert, bis die Drehzahl eine vorbestimmte Mindestdrehzahl erreicht und/oder die Leistung eine vorbestimmte Mindestleistung erreicht. Diese werden bei noch weiter ansteigender Windgeschwindigkeit beibehalten.

Die US 2015/0233349 A1 betrifft ein Verfahren zur Steuerung einer Windkraftanlage. Eine Windgeschwindigkeitsmessung wird stromaufwärts einer Windenergieanlage durchgeführt. Eine Rotordrehzahl kann zunächst verringert werden, um bei steigender Windgeschwindigkeit eine Erhöhung der Drehzahl zu ermöglichen.

US 9 739 264 B2 betrifft ein Verfahren zum Betreiben einer Windkraftanlage in Reaktion auf eine Windgeschwindigkeit, wobei die Windkraftanlage mindestens einen Rotor mit mehreren Blättern und einen Generator aufweist, wobei das Verfahren umfasst, bei Windgeschwindigkeiten über einer ersten Windgeschwindigkeit, Erhöhen des Anstellwinkels der Blätter und verringern der Rotorgeschwindigkeit, wobei die erste Windgeschwindigkeit größer als die Nennwindgeschwindigkeit ist.

Aus dem Stand der Technik sind verschiedene Verfahren bekannt, bei denen oberhalb einer vorgegebenen Windgeschwindigkeit die Leistungsabgabe und die Drehzahl einer Windenergieanlage abgesenkt werden. Zwar können damit die Betriebslasten wirksam reduziert werden, eine Maximierung des jährlichen Energieertrags wird jedoch nicht erzielt.

Die Erfindung zeichnet sich durch ein Verfahren gemäß Anspruch 1 und eine korrespondierende Vorrichtung gemäß Anspruch 11 zum Betreiben einer drehzahlvariablen Windenergieanlage aus. Die Vorrichtung ist beispielsweise ein Windenergieanlagenregler. Die Windenergieanlage weist beispielsweise einen Generator auf, dessen Generatormoment, also das Drehmoment des Generators, das auf den Rotor der Windenergieanlage wirkt, einstellbar ist.

Gemäß der Erfindung wird ein Wert einer Windgeschwindigkeit einer anströmenden Luftmasse ermittelt. Die Windgeschwindigkeit einer einen Rotor der Windenergieanlage anströmenden Luftmasse wird ermittelt. Wenn der ermittelte Wert der Windgeschwindigkeit größer als ein erster Schwellenwert für die Windgeschwindigkeit ist, wird eine Drehzahl des Rotors der Windenergieanlage verringert.

Die erste Schwellenwert für die Windgeschwindigkeit ist in Abhängigkeit von einer Leistungsabgabe der Windenergieanlage vorgegeben, wobei der erste Schwellenwert geringer vorgegeben wird, wenn die Leistungsabgabe höher ist. 1

Zudem wird das auf den Rotor wirkende Generatormoment beibehalten oder erhöht.

Wenn der ermittelte Wert der Windgeschwindigkeit größer als ein zweiter Schwellenwert für die Windgeschwindigkeit ist, wird die Drehzahl des Rotors verringert und das auf den Rotor wirkende Generatormoment verringert. Der zweite Schwellenwert ist größer als der erste Schwellenwert.

Der erste Schwellenwert für die Windgeschwindigkeit gibt eine erste vergleichsweise hohe Windgeschwindigkeit an, bei der mittels einer Verringerung der Drehzahl des Rotors eine Beschädigung der Windenergieanlage aufgrund der hohen einwirkenden Lasten vermieden oder reduziert wird. Beispielsweise liegt der erste Schwellenwert bei 21 m/s. Ein Betrieb mit verringerter Drehzahl ist jedoch noch möglich, ein Übergang der Windenergieanlage in einen lastfreien Betrieb ist noch nicht nötig. Die Drehzahl wird gemäß Ausführungsformen ausgehend von einem Wert vor dem Erreichen des ersten Schwellenwerts gemäß einer ersten windgeschwindigkeitsabhängig vorgegebenen Grenzdrehzahl kontinuierlich mit zunehmender Windgeschwindigkeit verringert. Gemäß weiteren Ausführungsformen ist auch ein stufenweises Verringern möglich. Beispielsweise wird teilweise kontinuierlich und teilweise stufenförmig verringert.

Beim Verringern der Drehzahl wird das Generatormoment im Vergleich zu einem Generatormoment beibehalten, das vor dem Erreichen des ersten Schwellenwerts vorliegt. Alternativ wird das Generatormoment in Bezug auf ein Generatormoment erhöht, das vor dem Erreichen des ersten Schwellenwerts anlag. Gemäß Ausführungsformen ist ein Schwellenwert für das Generatormoment vorgegeben, bis zudem das Generatormoment maximal erhöht wird.

Das Verringern der Drehzahl bei gleichzeitigem Beibehalten oder Erhöhen des Generatormoments ermöglicht eine kontinuierliche Reduzierung der Leistungsabgabe der Windenergieanlage mit der Windgeschwindigkeit. Die Drehzahl des Rotors lässt sich vergleichsweise schnell reduzieren, um Beschädigungen zu vermeiden. Durch das Beibehalten oder insbesondere das Erhöhen des Generatormoments verringert sich die Leistungsabgabe der Windenergieanlage in Abhängigkeit von der Drehzahl nur in geringerem Maße, als erfolgte gleichzeitig eine Absenkung des Generatormoments. Somit ist insbesondere eine höhere Leistungsausbeute realisierbar. Zudem sind Netzanforderungen besser umsetzbar.

Wenn die Windgeschwindigkeit weiter ansteigt, und der zweite Schwellenwert erreicht wird, wird die Drehzahl des Rotors weiter verringert. Der zweite Schwellenwert liegt beispielsweise bei 25 m/s. Zudem wird nun auch das auf den Rotor wirkende Generatormoment verringert. Somit wird die Leistungsabgabe der Windenergieanlage weiter verringert. Die Drehzahl des Rotors wird gemäß Ausführungsformen bei weitersteigendem Wind so weit verringert, dass die Windenergieanlage bei einer reduzierten Leistungsabgabe sicher betrieben werden kann. Für die weitere Drehzahlabsenkung ist gemäß Ausführungsformen oberhalb des zweiten Schwellenwerts eine zweite windgeschwindigkeitsabhängige Grenzdrehzahl vorgegeben. Weiterhin ist gemäß Ausführungsformen oberhalb des zweiten Schwellenwerts ein windgeschwindigkeitsabhängiges Generatorgrenzmoment vorgegeben. Die Windenergieanlage wird somit oberhalb des zweiten Schwellenwerts kontinuierlich in Abhängigkeit von der Windgeschwindigkeit in ihrer Leistungsabgabe reduziert. Gemäß weiteren Ausführungsformen ist auch ein stufenweises Verringern möglich. Beispielsweise wird teilweise kontinuierlich und teilweise stufenförmig verringert.

Gemäß Ausführungsformen sind die windgeschwindigkeitsabhängigen Grenzwerte oberhalb des ersten Schwellenwerts bzw. zwischen dem ersten und dem zweiten Schwellenwert und die windgeschwindigkeitsabhängigen Grenzwerte oberhalb des zweiten Schwellenwerts so vorgegeben, dass die resultierende windgeschwindigkeitsabhängige Leistungsabsenkung bezogen auf die Windgeschwindigkeit zwischen dem ersten und dem zweiten Schwellenwert und oberhalb des zweiten Schwellenwerts den gleichen Wert aufweist. Oberhalb des zweiten Schwellenwerts, beispielsweise bei einer Windgeschwindigkeit von 35 m/s ist es gemäß Ausführungsformen vorgesehen, dass die Windenergieanlage in einen lastfreien Betrieb übergeht.

Die Strömungsgeschwindigkeit bzw. Windgeschwindigkeit wird beispielsweise mittels eines Anemometers gemessen. Alternativ oder zusätzlich wird die Windgeschwindigkeit mittels eines Lidar-Systems gemessen. Alternativ oder zusätzlich wird die Windgeschwindigkeit anhand von anderen Einflussgrößen und einem Modell ermittelt, beispielsweise mittels einer sogenannten Windschätzerfunktion. Die Einflussgrößen sind beispielsweise die Drehzahl, ein Pitchwinkel der Rotorblätter und/oder die Leistungsabgabe.

Gemäß zumindest einer weiteren Ausführungsform ist der erste Schwellenwert in Abhängigkeit von einer Leistungsabgabe der Windenergieanlage vorgegeben. Je niedriger die Leistungsabgabe zum Zeitpunkt des Erreichens des ersten Schwellenwerts ist, desto höher ist beispielsweise der erste Schwellenwert. Alternativ oder zusätzlich ist der erste Schwellenwert für die Windenergieanlage vorgegeben, der einer maximal zulässigen Drehzahl für die Windenergieanlage entspricht.

Gemäß zumindest einer Ausführungsform ist der zweite Schwellenwert in Abhängigkeit von einer Leistungsabgabe der Windenergieanlage vorgegeben. Beispielsweise ist der zweite Schwellenwert geringer, wenn die Leistungsabgabe höher ist. Alternativ oder zusätzlich ist der zweite Schwellenwert für die Windenergieanlage vorgegeben, der einer maximal zulässigen Drehzahl und/oder einem maximal zulässigen generatorischen Moment entspricht.

Gemäß zumindest einer Ausführungsform wird die Drehzahl des Rotors mit einem ersten Gradienten kontinuierlich verringert, wenn der ermittelte Wert der Windgeschwindigkeit zwischen dem ersten Schwellenwert und dem zweiten Schwellenwert liegt. Der Gradient gibt eine Steigung für die Verringerung der Drehzahl vor. Der Gradient gibt vor, wie sich die Drehzahl in Abhängigkeit der Windgeschwindigkeit verringert.

Gemäß zumindest einer Ausführungsform wird die Drehzahl des Rotors kontinuierlich mit einem zweiten Gradienten verringert, wobei eine Steigung des zweiten Gradienten geringer ist als eine Steigung des ersten Gradienten, wenn der ermittelte Wert der Windgeschwindigkeit größer ist als der zweite Schwellenwert. Der zweite Gradient unterscheidet von dem ersten Gradienten, so dass eine unterschiedliche Abhängigkeit der Drehzahlveränderung zur Windgeschwindigkeit vorliegt. Beim Überschreiten des ersten Schwellenwerts bis hin zum zweiten Schwellenwert ist insbesondere eine schnelle Reduzierung der Drehzahl vorgesehen. Beim Überschreiten des zweiten Schwellenwerts ist die Drehzahl schon soweit reduziert, dass Beschädigungen an der Windenergieanlage weitestgehend verhindert sind. Somit ist eine langsamere Reduzierung der Drehzahl möglich. Dies ermöglicht einen Betrieb der Windenergieanlage auch bei vergleichsweise hohen Windgeschwindigkeiten und somit zumindest eine reduzierte Leistungsabgabe auch bei hohen Windgeschwindigkeiten. Im Vergleich zu einem Übergang in einen lastfreien Betrieb, bei der die Leistungsabgabe auf null sinkt, ist somit ein weiterer Betrieb der Windenergieanlage mit gleichzeitiger Leistungsabgabe möglich.

Gemäß zumindest einer Ausführungsform wird die Drehzahl des Rotors in einem Drehzahlbereich um eine Synchrondrehzahl der Windenergieanlage erhöht, wenn sich der ermittelte Wert der Windgeschwindigkeit ausgehend von einem Wert größer als der zweite Schwellenwert verringert. Beispielsweise ist der Drehzahlbereich um die Synchrondrehzahl durch eine Abweichung von 2% bis 5% von der Synchrondrehzahl vorgegeben.

Fällt die Windgeschwindigkeit ab, wenn sich die Drehzahl der Windenergieanlage in einem schmalen Drehzahlbereich unter der Synchrondrehzahl der Windenergieanlage befindet, so wird die Drehzahl für weiter abfallende Windgeschwindigkeiten beispielsweise zunächst konstant gehalten und anschließend erhöht, insbesondere stufenförmig erhöht. Beispielsweise erfolgt eine Erhöhung auf eine Drehzahl oberhalb der Synchrondrehzahl. Außerhalb des Drehzahlbereichs um die Synchrondrehzahl der Windenergieanlage wird die Drehzahl gemäß den zuvor beschriebenen Ausführungsformen abgesenkt bzw. erhöht.

Wenn sich der ermittelte Wert der Windgeschwindigkeit in dem Drehzahlbereich um die Synchrondrehzahl erhöht, wird die Drehzahl beispielsweise zunächst konstant gehalten und danach abgesenkt, beispielsweise stufenförmig, wobei die Synchrondrehzahl der Windenergieanlage unterschritten wird.

Die Absenkung der Drehzahl weist einen Verlauf auf, der zumindest abschnittsweise um die Synchrondrehzahl der Windenergieanlage von einem Verlauf des Verringerns abweicht. Die Abhängigkeit der Drehzahl von der Windgeschwindigkeit ist für eine zunehmende Windgeschwindigkeit anders als eine Abhängigkeit der Drehzahl von der Windgeschwindigkeit bei abnehmenden Windgeschwindigkeiten. Eine sogenannte Hysterese wird vorgesehen.

Folglich kann auf Besonderheiten der Windenergieanlage bei der Veränderung des Drehmoments oder der Veränderung der Leistungsabgabe Rücksicht genommen werden. Insbesondere ist es möglich, die Leistungsabgabe oder die Rotordrehzahl innerhalb vorgegebener Bereiche konstant zu halten.

Gemäß zumindest einer Ausführungsform wird das Generatormoment des Rotors erhöht, wenn sich der ermittelte Wert der Strömungsgeschwindigkeit ausgehend von einem Wert größer als der zweite Schwellenwert verringert in einem Drehzahlbereich um die Synchrondrehzahl. Für fallende Windgeschwindigkeiten wird das Generatormoment beispielsweise zunächst konstant gehalten oder zunächst leicht erhöht und dann konstant gehalten. Nachfolgend wird das Generatormoment stufenförmig abgesenkt.

Wenn sich der ermittelte Wert der Windgeschwindigkeit in dem Drehzahlbereich um die Synchrondrehzahl erhöht, wird das Generatormoment der Windenergieanlage beispielsweise zunächst abgesenkt, sodass die Leistungsabgabe auch in dem Drehzahlbereich um die Synchrondrehzahl der Windenergieanlage kontinuierlich mit steigender Windgeschwindigkeit abgesenkt werden kann. Anschließend wird das Generatormoment beispielsweise erhöht, insbesondere stufenförmig, sodass bei der stufenförmigen Drehzahlabsenkung unter die Synchrondrehzahl die Leistungsabgabe der Windenergieanlage kein Sprungverhalten aufweist.

Der Verlauf des Generatormoments weist einen Verlauf auf, der zumindest abschnittsweise um die Synchrondrehzahl der Windenergieanlage von dem Verlauf außerhalb des Drehzahlbereichs um die Synchrondrehzahl abweicht, der beispielsweise in den vorhergehenden Ausführungsformen beschrieben ist. Das Erhöhen des Drehmoments weist einen Verlauf auf, der zumindest abschnittsweise von einem Verlauf des Verringerns abweicht.

Alternativ oder zusätzlich zur Hysterese bei der Abhängigkeit der Drehzahl ist eine Hysterese bei der Abhängigkeit des Drehmoments von der Windgeschwindigkeit vorgesehen. Für fallende Windgeschwindigkeiten ist folglich ein sprunghafter Anstieg für die Leistung der Windenergieanlage um die Synchrondrehzahl der Windenergieanlage vorgesehen.

Gemäß mindestens einer Ausführungsform wird die Windgeschwindigkeit mittels eines Anemometers gemessen. Die gemessene Windgeschwindigkeit kann ergänzend mit Hilfe einer Transferfunktion auf eine freie Windgeschwindigkeit ohne Beeinflussung durch den Rotor der Windenergieanlage korrigiert werden. Die angegebenen Schwellenwerte und windgeschwindigkeitsabhängigen Grenzwerte können also in Bezug auf eine freie Windgeschwindigkeit oder in Bezug auf eine vom Rotor der Windenergieanlage beeinflusste gemessene Windgeschwindigkeit vorgegeben sein. Alternativ wird die Windgeschwindigkeit mittels eines LIDAR-oder SODAR-Systems gemessen. Alternativ wird die Windgeschwindigkeit anhand von anderen Einflussgrößen und einem Modell ermittelt, beispielsweise mittels einer sogenannten Windschätzerfunktion. Die Einflussgrößen sind beispielsweise die Drehzahl, ein Pitchwinkel der Rotorblätter und/oder die Leistungsabgabe.

Gemäß zumindest einer Ausführungsform wird ein Mittelwert der Werte der Windgeschwindigkeit in einem vorgegebenen Zeitraum ermittelt, um den Wert der Windgeschwindigkeit zu ermitteln. Beispielsweise ist der Zeitraum 3 Sekunden lang, 10 Sekunden lang oder 30 Sekunden lang oder weist eine andere Länge auf. Somit werden einzelne Spitzenveränderungen der Windgeschwindigkeit gefiltert. Insbesondere wird der Zeitraum unterschiedlich vorgegeben, beispielsweise in Abhängigkeit von gemessenen oder erwarteten Turbulenzen der Windgeschwindigkeit.

Gemäß zumindest einer Ausführungsform ist der Zeitraum kleiner vorgegeben, wenn sich der Wert der Windgeschwindigkeit erhöht, als wenn sich der Wert der Windgeschwindigkeit verringert. Somit wird der Wert der Windgeschwindigkeit gefiltert oder gemittelt in einer asymmetrischen Art und Weise. Insbesondere bei steigendem Wind wird durch den kürzeren Zeitraum ein schnelleres Reagieren auf Veränderungen der Windgeschwindigkeiten und der damit verbundenen Lasten ermöglicht. Bei abnehmenden Windgeschwindigkeiten ermöglicht ein längerer Zeitraum insbesondere eine gleichmäßigere Leistungsabgabe.

Weitere Vorteile, Merkmale und Weiterbildungen ergeben sich aus den nachfolgenden in Verbindung mit den Figuren erläuterten Beispielen. Gleiche, gleichartige oder gleichwirkende Elemente können darin figurenübergreifend mit den gleichen Bezugszeichen versehen sein.

Es zeigen:
Figur 1a eine schematische Darstellung einer Windenergieanlage gemäß einem Ausführungsbeispiel,
Figur 1b eine detaillierte schematische Darstellung der Windenergieanlage aus Fig. 1a in einem Windpark gemäß einem Ausführungsbeispiel,
Figuren 2a bis 2c schematische Darstellungen von Verläufen der Leistungsabgabe, Drehzahl und des Generatormoments gemäß einem Ausführungsbeispiel, und
Figuren 3a bis 3c schematische Darstellungen von Verläufen der Leistungsabgabe, der Drehzahl und des Generatormoments in einem Drehzahlbereich um eine Synchrondrehzahl der Windenergieanlage gemäß einem Ausführungsbeispiel.

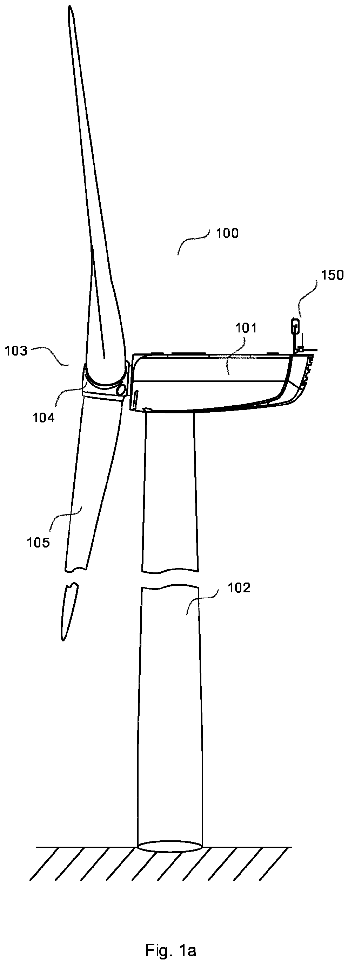

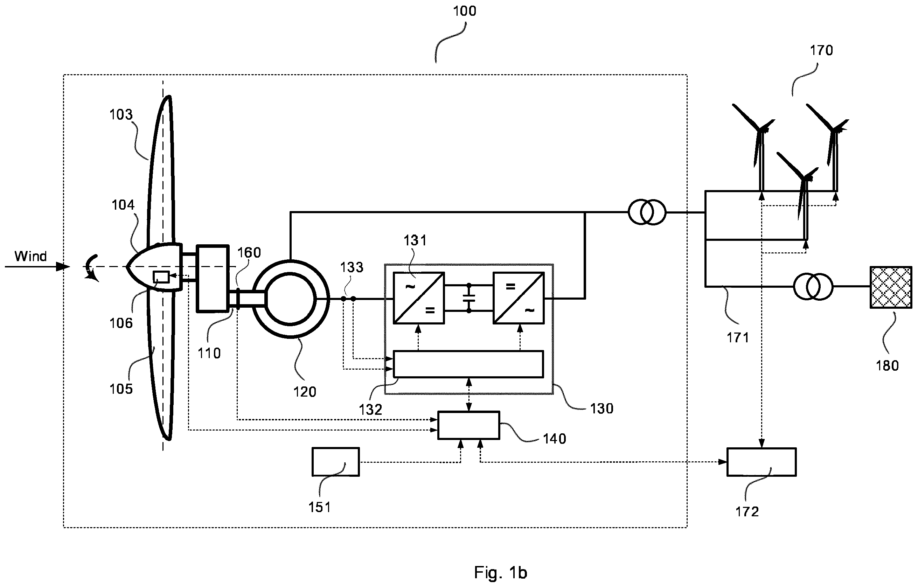

Figur 1a und 1b zeigen eine schematische Darstellung einer Windenergieanlage 100 gemäß einem Ausführungsbeispiel. Die Windenergieanlage 100 weist eine Standvorrichtung 102 auf, insbesondere einen Turm. An einem Ende des Turms 102 ist eine Gondel 101 drehbar gelagert.

Die Gondel 101 weist einen Generator 120 auf. Der Generator ist beispielsweise über einen Antriebstrang 110, mit einem Rotor 103 gekoppelt. Der Rotor 103 weist ein oder mehrere Rotorblätter 105 auf, die an einer Rotornabe 104 angeordnet sind.

Der Rotor 103 wird im Betrieb durch eine Luftströmung, beispielsweise Wind, in Rotation versetzt. Diese Rotationsbewegung wird über den Antriebstrang auf einen Rotor (nicht gezeigt) des Generators 120 übertragen. Der Generator 120 wandelt die kinetische Energie des Rotors 103 in elektrische Energie um.

Die Windenergieanlage 100 weist weiterhin ein Sensorarray 150 auf, welches an der Außenseite der Gondel 101 angebracht ist. Als Teil des Sensorarrays 150 ist ein Anemometer 151 vorgesehen, um einen Messwert für die Windgeschwindigkeit zu erfassen.

Figur 1b zeigt eine detaillierte schematische Darstellung der Windenergieanlage gemäß dem Ausführungsbeispiel nach Fig. 1a in einem Windpark 170.

Die Windenergieanlage 100 ist mit einem doppelt-gespeisten Asynchrongenerator als Generator 120 eingerichtet. Der Stator (nicht gezeigt) des Generators 120 ist elektrisch mit einem elektrischen Übertragungsnetz 180 verbunden. Der Rotor des Generators 120 ist elektrisch über einem Hauptumrichter 130 mit dem elektrischen Übertragungsnetz 180 verbunden. Zur Anbindung der Windenergieanlage an das elektrische Übertragungsnetz 180 können weitere Vorrichtungen vorgesehen sein. Die Windenergieanlage 100 kann beispielsweise über einen Mittelspannungstransformator elektrisch mit einem Windparkspannungsnetz 171 verbunden sein, welches wiederum über einen Hochspannungstransformator mit dem elektrische Übertragungsnetz 180 verbunden ist. Die Windenergieanlage speist über diese elektrische Verbindung die vom Generator bereitgestellte Leistung in das Übertragungsnetz ein. Zur übergeordneten Regelung der Leistungsabgabe der Windenergieanlage 100 sowie weiterer Windenergieanlagen in dem Windpark 170 ist ein Windparkregler 172 vorgesehen.

Ein Windenergieanlagenregler 140 ist vorgesehen, um die Windenergieanlage 100 zu regeln. Beispielsweise empfängt der Windenergieanlagenregler 140 Signale und Steuerbefehle von dem Windparkregler 172 und ist zu diesem Zweck datenkommunikativ mit diesem verbunden. Der Windenergieanlagenregler 140 ist weiterhin mit einer Blattwinkelstellvorrichtung 106 verbunden, mittels derer der Windenergieanlagenregler 140 einen Pitchwinkel der Rotorblätter 105 steuern.

Der Hauptumrichter 130 der Windenergieanlage 100 weist einen generatorseitigen Umrichter 131 und einen Umrichterregler 132 auf. Der Umrichterregler 132 ist eingerichtet, über eine Regelung der Rotorströme in dem Generatorrotor ein Generatormoment an dem Generator 120 einzustellen. Zu diesem Zweck gibt der Umrichterregler 132 dem netzseitigen Umrichter 131 Stellgrößen, beispielsweise für Rotorströme, Wirk- und Blindleistung und/oder Generatormoment vor. Entsprechende Regelungsverfahren sind aus dem Stand der Technik bekannt. Der rotorseitige Umrichter 131 stellt die Rotorströme und damit das Generatormoment beispielsweise durch die Schaltung von leistungselektronischen Bauelementen ein. Zur Regelung des Generatormoments ist der Umrichterregler 132 datenkommunikativ mit dem Windenergieanlagenregler 140 verbunden und erhält von diesem einen Sollwert für ein Generatormoment oder eine abzugebende Wirkleistung. Zur Regelung benötigten Eingangsgrößen wie Rotorkreisströme und Rotorkreisspannungen werden von einem Strom/Spannungssensor 133 erfasst und liegen als Signal an dem Umrichterregler 132 an.

Die Windenergieanlage 100 weist einen Drehzahlsensor 160 auf. Dieser kann an einer beliebigen Stelle an dem Antriebstrang 110 vorgesehen sein, beispielsweise an einer Getriebeausgangswelle, die mit dem Generatorrotor des Generators 120 verbunden ist. Von dem Drehzahlsensor 160 gemessene Drehzahlwerte liegen als Eingangsgröße an dem Windenergieanlagenregler 140 an.

Weiterhin liegen die von dem Anemometer 151 gemessenen Messwerte für die Windgeschwindigkeit liegen als Eingangsgrößen an dem Windenergieanlagenregler 140 an.

Der Windenergieanlagenregler 140 ist eingerichtet, die Leistungsabgabe der Windenergieanlage sowie deren Drehzahl zu regeln und ist dafür mit einer entsprechenden Software konfiguriert. Die Regelung der Leistung und Drehzahl erfolgt gemäß dem für drehzahlvariable Windenergieanlagen bekannten Verfahren, wobei die Leistung über das Generatormoment mit der Rotordrehzahl verknüpft ist. Die Rotordrehzahl wird über eine Einstellung der Rotorblattstellwinkel und das auf den Antriebstrang wirkende Generatormoment eingestellt.

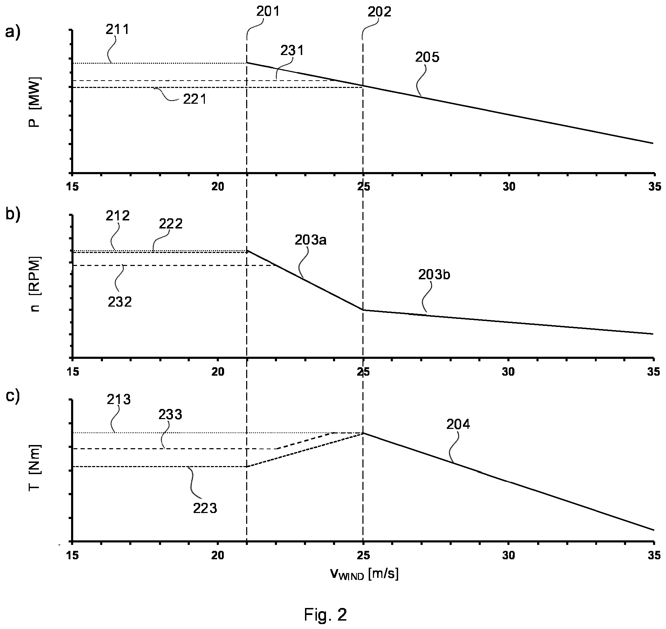

Figuren 2a bis 2c zeigen eine Reduzierung einer Drehzahl 212, 222, 232 des Rotors 103 bei steigender Windgeschwindigkeit, also wenn die Luftströmung an der Windenergieanlage 100 zunimmt.

In den Figuren 2a bis 2c ist auf der X-Achse jeweils die Windgeschwindigkeit aufgetragen. Auf der Y-Achse ist in Figur 2a eine Leistungsabgabe, in Figur 2b eine Drehzahl und in Figur 2c ein Generatormoment aufgetragen.

Ein erster Schwellenwert 201 und ein zweiter Schwellenwert 202 sind beispielsweise in Abhängigkeit der Windgeschwindigkeit vorgegeben. Beispielsweise liegt der erste Schwellenwert 201 bei einer Windgeschwindigkeit von etwa 21 m/s. Der erste Schwellenwert kann auch höher oder niedriger liegen. Beispielsweise liegt der zweite Schwellenwert 201 bei einer Windgeschwindigkeit von etwa 25 m/s. Der zweite Schwellenwert 202 kann auch höher oder niedriger sein. Der zweite Schwellenwert 202 ist insbesondere höher als der erste Schwellenwert 201. Der erste Schwellenwert 201 liegt insbesondere bei einer Windgeschwindigkeit, bei der ohne Eingriff in die Regelung der Windenergieanlage 100 Schädigungen an der Windenergieanlage 100 aufgrund einer zunehmenden Drehzahl 212, 222, 232 und/oder einen zunehmenden Generatormoment 213, 223, 233 auftreten würden. Eine maximale Leistungsabgabe 205 der Windenergieanlage 100 nimmt bei steigenden Windgeschwindigkeiten ab dem ersten Schwellenwert 201 vorgegeben ab.

Der Windenergieanlagenregler 140 steuert die Windenergieanlage 100, insbesondere eine Pitchregelung der Rotorblätter 105 so, dass sich die Drehzahl 212, 222, 232 verringert (Figur 2b) wenn die gemessene Windgeschwindigkeit über den ersten Schwellenwert 201 ansteigt. Somit wird eine Beschädigung an der Windenergieanlage 100 aufgrund der hohen Windgeschwindigkeit vermieden.

Insbesondere nimmt die Drehzahl 212, 222, 232 mit einem ersten vorgegebenen Gradienten 203a ab. Die Drehzahl 212, 222, 232 kann kontinuierlich oder stufenförmig abnehmen, vorgegeben durch den ersten Gradienten 203a. Der erste Gradient 203a ist insbesondere so vorgegeben, dass eine schnelle Reduzierung der Drehzahl 212, 222, 232 erfolgt. Dadurch werden Beschädigungen gut vermieden. Insbesondere ist die Steigung des ersten Gradienten 203a vorgegeben durch die gemessene Windgeschwindigkeit. Je stärker die Windgeschwindigkeit steigt desto größer ist die Steigung des Gradienten 203a, um eine schnelle Reduzierung der Drehzahl zu ermöglichen. Alternativ ist der erste Gradient 203a fest vorgegeben und beispielsweise in dem Windenergieanlagenregler 140 gespeichert.

Das Generatormoment 233 wird mit steigender Windgeschwindigkeit über den ersten Schwellenwert 201 hinaus stets konstant gehalten und dann erhöht. Alternativ wird das weitere Generatormoment 223 nach Erreichen des ersten Schwellenwerts 201 bei steigender Windgeschwindigkeit kontinuierlich oder stufenförmig erhöht. Das Generatormoment 213, 223, 233 der Windenergieanlage 100 wird beim Erreichen des ersten Schwellenwerts 201 bei steigender Windgeschwindigkeit nicht verringert sondern konstant gehalten und/oder erhöht.

Das Gleichhalten des Generatormoments 213, 223, 233bzw. das Erhöhen des Generatormoments 213, 223, 233 ermöglicht eine vergleichsweise schnelle Reduzierung der Drehzahl 212, 222, 232 bei einer geringen Reduzierung einer Leistungsabgabe 211, 221, 231 der Windenergieanlage 100. Die Leistungsabgabe 211, 221, 231 würde, wenn kein Eingriff in die Regelung des Generatormoments 213, 223, 233 erfolgen würde, deutlich schneller absinken, als wenn das Generatormoment 213, 223, 233 gleichgehalten wird oder erhöht wird. Die Leistungsabgabe 211, 221, 231 ist ein Produkt des Generatormoment 213, 223, 233 und der Winkelgeschwindigkeit, also der Drehzahl 212, 222, 232. Wenn die Drehzahl 212, 222, 232 folglich stark sinkt ermöglicht ein Erhöhen des Generatormoments 213, 223, 233 eine schwächere Reduzierung der Leistungsabgabe 211, 221, 231, als die Verringerung der Drehzahl 212, 222, 232 alleine vorgibt.

Wenn sich die Windgeschwindigkeit weiter erhöht und den zweiten Schwellenwert 202 erreicht, wird zusätzlich zur Drehzahl 212, 222, 232 auch das Generatormoment 213, 223, 233 verringert. Ein maximales Generatormoment 204 wird ab dem zweiten Schwellenwert 202 reduziert. Zum Zeitpunkt des Erreichens des zweiten Schwellenwerts 202 weist das Generatormoment 213, 223, 233 somit insbesondere ein lokales Maximum auf. Die Leistungsabgabe 211, 221, 231 wird durch das Reduzieren der Drehzahl 212, 222, 232 und des Reduzieren des Generatormoment 213, 223, 233 reduziert, so dass bei weiterem Zunehmen der Windgeschwindigkeit ein Abschalten bei möglichst geringer Leistungsabgabe 211, 221, 231 erfolgen kann.

Bei Windgeschwindigkeiten oberhalb des zweiten Schwellenwerts 202 weist die Reduzierung der Drehzahl 212, 222, 232 beispielsweise einen zweiten Gradienten 203b auf. Der erste Gradient 203a und der zweite Gradient 203b können jeweils auch als windgeschindigkeitsabhängiger Rotordrehzahlkennwert bezeichnet werden.

Insbesondere ist der zweite Gradient 203b unterschiedlich zum ersten Gradienten 203a. Insbesondere ist die Steigung des zweiten Gradienten 203b geringer als die Steigung des ersten Gradienten 203a. Der zweite Gradient 203b gibt die Reduzierung der Drehzahl 212, 222, 232 beispielsweise kontinuierlich oder stufenförmig vor. Der zweite Gradient 203b ist wie der erste Gradient 203a beispielsweise vorgegeben und in dem Windenergieanlagenregler 140 gespeichert. Alternativ oder zusätzlich wird der zweite Gradient 203b in Abhängigkeit der vorherrschenden Windgeschwindigkeiten an der Windenergieanlage 100 unterschiedlich vorgegeben.

Die im Vergleich zum ersten Gradienten 203a flachere Steigung des zweiten Gradienten 203b ist möglich, da die Drehzahl 212, 222, 232 im Bereich zwischen dem ersten Schwellenwert 201 und dem zweiten Schwellenwert 202 bereits soweit abgesenkt wurde, dass auch bei hohen Windgeschwindigkeiten eine Beschädigung der Windenergieanlage 100 weitestgehend vermieden werden kann. Somit muss die Drehzahl 212, 222, 232 nur noch geringer abgesenkt werden. Somit ist auch bei hohen Windgeschwindigkeiten und weitersteigenden Windgeschwindigkeiten ein Betrieb der Windenergieanlage 100 mit vergleichsweise wenig veränderter Leistungsabgabe 211, 221, 231 möglich.

Im reduzierten Betrieb der Windenergieanlage 100 aufgrund der hohen Windgeschwindigkeiten ist eine vergleichsweise hohe Leistungsabgabe 211, 221, 231 möglich, da das Generatormoment 213, 223, 233 von dem Windenergieanlagenregler 140 geregelt und/oder gesteuert wird. Plötzliches komplettes Ausschalten der Windenergieanlage 100 kann so vermieden werden. Netzanforderungen des Betreibers des Stromnetzes, an das die Windenergieanlage 100 angeschlossen ist, können bei hohen Windgeschwindigkeiten realisiert werden. Insbesondere wird vermieden, dass aufgrund einer Notausschaltung der Windenergieanlage 100 die Nennleistung auf einmal innerhalb sehr kurzer Zeit vollständig vom Netz genommen wird.

Aufgrund der vergleichsweise langsamen Abnahme der Leistungsabgabe 211, 221, 231 zwischen dem ersten Schwellenwert 201 und dem zweiten Schwellenwert 202 ist es insbesondere möglich, den ersten Schwellenwert 201 vergleichsweise niedrig anzusetzen. Auch beim Überschreiten des ersten Schwellenwerts 201 wird eine ausreichende Leistungsabgabe 211, 221, 231 erzielt, da das Generatormoment 213, 223, 233 gleich bleibt oder erhöht wird. Somit wird die Windenergieanlage 100 weiter geschont.

Oberhalb des ersten Schwellenwerts 201 werden die Drehzahl 212, 222, 232 und das Generatormoment 213, 223, 233 aktiv von dem Windenergieregler 140 kontrolliert, während die Leistungsabgabe 211, 221, 231 reduziert wird. Zunächst wird die Leistungsabgabe 211, 221, 231 leicht reduziert, indem die Drehzahl 212, 222, 232 stark reduziert wird, jedoch das Generatormoment 213, 223, 233 konstant gehalten wird oder erhöht wird. Insbesondere wird das Generatormoment 213, 223, 233 mit einem vorgegebenen Maximalwert erhöht.

Nach Erreichen des zweiten Schwellenwerts 202 wird die Leistungsabgabe 211, 221, 231 weiter reduziert durch ein weiteres Reduzieren des Generatormoments 213, 223, 233. Insbesondere ist die Reduzierung der Drehzahl 212, 222, 232 und/oder die Reduzierung des Generatormoments 213, 223, 233 jeweils abhängig von der Geschwindigkeit der Strömung.

Die Geschwindigkeit der Strömung wird beispielsweise mittels des Anemometers 151 gemessen. Alternativ oder zusätzlich können andere Sensoren vorgesehen sein wie beispielsweise ein Lidar-System. Alternativ oder zusätzlich wird die Geschwindigkeit der Strömung basierend auf Betriebsparametern der Windenergieanlage 100 ermittelt, beispielsweise basierend auf der Drehzahl 212, 222, 232, einem Pitchwinkel der Rotorblätter 105 und/oder der Leistungsabgabe 211, 221, 231.

Die Geschwindigkeit der Strömung wird beispielsweise gefiltert ermittelt oder ein Durchschnittswert wird angenommen beispielsweise über einen Zeitraum von 3 Sekunden, 10 Sekunden oder 30 Sekunden. Beispielsweise ist ein Tiefpassfilter vorgesehen. Der Filter oder die Durchschnittsbildung sind beispielsweise in Abhängigkeit von gemessenen oder erwarteten Turbulenzen der Strömung vorgegeben. Bei geringeren Turbulenzen ist der Zeitraum für die Mittelwertbildung beispielsweise länger als bei starken erwarteten Turbulenzen.

Beispielsweise ist der Filter und/oder die Mittelwertbildung unterschiedlich für zunehmende Geschwindigkeiten der Strömung im Vergleich zu abnehmenden Windgeschwindigkeiten der Strömung. Bei zunehmenden Geschwindigkeiten der Strömung wird beispielsweise ein vergleichsweise kurzer Zeitraum vorgegeben, beispielsweise 10 Sekunden. Somit ist eine vergleichsweise schnelle Reaktion auf die Erhöhung der Geschwindigkeit der Strömung möglich. Somit ist eine adäquate Leistungsreduzierung möglich. Wenn die Geschwindigkeit der Strömung wieder abnimmt, ist beispielsweise ein vergleichsweise lange Zeitraum vorgegeben, beispielsweise 3 Minuten, um die Leistungsabgabe 211, 221, 231 vergleichsweise konstant zu halten, was beispielsweise eine Netzanforderung ist.

Gemäß Ausführungsformen sind der erste Schwellenwert 201 und der zweite Schwellenwert 202 jeweils fest vorgegeben beispielsweise in Abhängigkeit der Bauart der Windenergieanlage 100. Gemäß weiteren Ausführungsbeispielen sind die beiden Schwellenwerten 201, 202 in Abhängigkeit der Leistungsabgabe 211, 221, 231 vorgegeben. Beispielsweise sind der erste Schwellenwert 201 und der zweite Schwellenwert 202 bei einer gleichen Windgeschwindigkeit geringer, wenn die Leistungsabgabe 211, 221, 231 geringer ist.

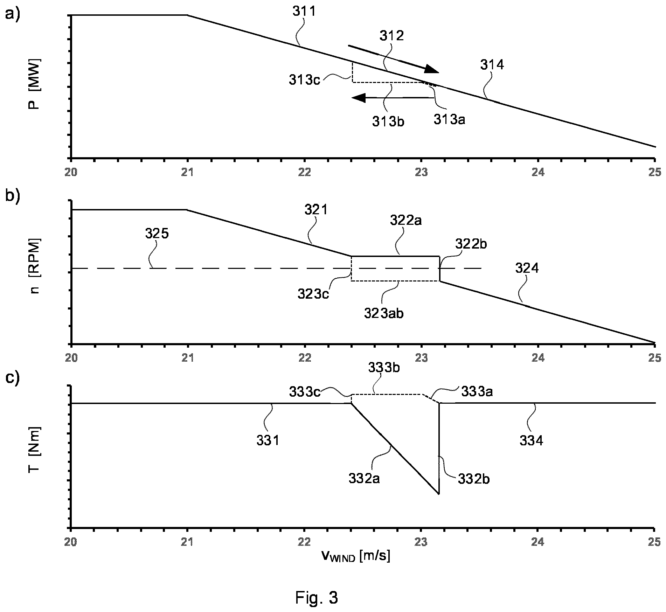

Wie in Figuren 3a bis 3c dargestellt, ist es möglich, einen Verlauf 312 der Reduzierung der Leistungsabgabe bei steigenden Windgeschwindigkeiten unterschiedlich zu einem Verlauf 313a, 313b, 313c der Leistungsabgabe bei abnehmenden Windgeschwindigkeiten zu realisieren. Eine Hystereseregelung ist vorgesehen. Insbesondere wird das Verfahren gemäß den Figuren 3a bis 3c in einem Drehzahlbereich um eine Synchrondrehzahl 325 der Windenergieanlage verwendet. Beispielsweise wird das Verfahren wie in den Figuren 3a bis 3c dargestellt verwendet, wenn die Drehzahl der Windenergieanlage 100 einen oberen Grenzwert erreicht, der geringfügig oberhalb der Synchrondrehzahl 325 der Windenergieanlage 100 liegt.

In den Figuren 3a bis 3c ist auf der X-Achse jeweils die Windgeschwindigkeit aufgetragen. Auf der Y-Achse ist in Figur 3a eine Leistungsabgabe, in Figur 3b eine Drehzahl und in Figur 3c ein Generatormoment aufgetragen.

Beispielsweise wird die Drehzahl so reduziert, dass ein Verlauf 322a, 322b der Drehzahl auftritt, der von einem Verlauf 323ab, 323c der Drehzahl bei abnehmenden Windgeschwindigkeiten abweicht. Entsprechend weicht ein Verlauf 332a, 332b des Generatormoments bei steigenden Windgeschwindigkeiten von einem Verlauf 333a, 333b, 333c bei abnehmenden Windgeschwindigkeiten ab. Durch die Anhebung des Generatormoments bei reduzierter Drehzahl ist es möglich, die Leistungsabgabe für einen gewissen Zeitraum konstant zu halten (Verlauf 333b). Somit wird die Drehzahlverringerung vorrangig durchgeführt, unabhängig von externen Vorgaben für die Windenergieanlage 100.

Insbesondere liegt der ersten Teilabschnitt 322a der Drehzahl des Rotors 103 in einem schmalen Drehzahlbereich um eine Synchrondrehzahl 325 der Windenergieanlage 100. In dem ersten Teilabschnitt 322a wird die Drehzahl konstant gehalten, auch wenn sich der ermittelte Wert der Windgeschwindigkeit erhöht.

Bei einem weiteren Ansteigen der Windgeschwindigkeit erfolgt in einem zweiten Teilabschnitt 322b eine stufenförmige Absenkung der Drehzahl, wobei die Synchrondrehzahl 325 der Windenergieanlage unterschritten wird.

Die Abhängigkeit der Drehzahl von der Windgeschwindigkeit ist für eine zunehmende Windgeschwindigkeit anders als eine Abhängigkeit der Drehzahl von der Windgeschwindigkeit bei abnehmenden Windgeschwindigkeiten. Eine sogenannte Hysterese wird vorgesehen. Fällt die Windgeschwindigkeit ab, wenn sich die Drehzahl der Windenergieanlage in einem schmalen Drehzahlbereich unter der Synchrondrehzahl 325 der Windenergieanlage befindet, so wird die Drehzahl für weiter abfallende Windgeschwindigkeiten in einem dritten Teilabschnitt 323ab konstant gehalten, bevor diese in einem vierten Teilabschnitt 323c stufenförmig erhöht wird, wobei die Erhöhung auf eine Drehzahl oberhalb der Synchrondrehzahl 325 erfolgt. Außerhalb des schmalen Drehzahlbereichs um die Synchrondrehzahl 325 der Windenergieanlage 100, also beispielsweise in den Abschnitten 321 und 324, wird die Drehzahl gemäß den zuvor beschriebenen Ausführungsbeispielen abgesenkt beziehungsweise erhöht.

Gemäß dieser Ausführungsform wird das Generatormoment in einem ersten Teilabschnitt 332a abgesenkt, so dass die Leistungsabgabe 312 auch in dem Drehzahlbereich 332a um die Synchrondrehzahl 325 der Windenergieanlage kontinuierlich mit steigender Windgeschwindigkeit abgesenkt werden kann. In einem zweiten Teilabschnitt 332b wird das Generatormoment der Windenergieanlage stufenförmig erhöht, so dass bei der stufenförmigen Drehzahlabsenkung 322b unter die Synchrondrehzahl 325, die Leistungsabgabe 311, 312, 314 der Windenergieanlage 100 kein Sprungverhalten aufweist.

Für fallende Windgeschwindigkeiten wird das Generatormoment in einem dritten Bereich 333a zunächst leicht erhöht und dann konstant 333b gehalten. Alternativ wird auf die Erhöhung 333a verzichtet und das Generatormoment konstant gehalten.

In einem vierten Bereich 333c wird das Generatormoment stufenförmig abgesenkt. Der Verlauf des Generatormoments weist einen Verlauf 332a, 332b, 333a, 333b, 333c auf, der zumindest abschnittsweise um die Synchrondrehzahl 325 der Windenergieanlage 100 von dem Verlauf 204, 213, 223, 223 wie in Figur 2 dargestellt abweicht. Für fallende Windgeschwindigkeiten ist folglich ein sprunghafter Anstieg für die Leistung 313a, 313b, 313c der Windenergieanlage 100 um die Synchrondrehzahl 325 der Windenergieanlage 100 vorgesehen.

Außerhalb des schmalen Drehzahlbereichs um die Synchrondrehzahl 325 der Windenergieanlage 100, also beispielsweise in den Abschnitten 331 und 334, wird das Generatormoment konstant gehalten.

Das erfindungsgemäße Verfahren ermöglicht bei steigenden Geschwindigkeiten der Strömung ein schnelles Reduzieren der Drehzahl 212, 222, 232 und somit ein schnelles Reduzieren der Belastungen für die Windenergieanlage 100. Erst nachfolgend wird das Generatormoment 213, 223, 233 reduziert. Somit ist eine schnelle Reduzierung der Belastungen für die Windenergieanlage 100 bei vergleichsweise langsamer Reduzierung der Leistungsabgabe 205 bzw. bei zeitweise konstant gehaltener Leistungsabgabe 205 möglich.

### Bezugszeichen

- 100: Windenergieanlage
- 101: Gondel
- 102: Standvorrichtung
- 103: Rotor
- 104: Rotornabe
- 105: Rotorblatt
- 106: Blattwinkelstellvorrichtung
- 110: Antriebsstrang
- 120: Generator
- 130: Hauptumrichter
- 131: generatorseitiger Umrichter
- 132: Umrichterregler
- 133: Strom/Spannungssensor
- 140: Windenergieanlagenregler
- 150: Sensorarray
- 151: Anemometer
- 160: Drehzahlsensor
- 170: Windpark
- 171: Mittelspannungsnetz
- 172: Windparkregler
- 180: elektrisches Übertragungsnetz
- 201: erster Schwellenwert für die Windgeschwindigkeit
- 202: zweiter Schwellenwert für die Windgeschwindigkeit
- 203a: windgeschwindigkeitsabhängiger Rotordrehzahlgrenzwert
- 203b: windgeschwindigkeitsabhängiger Rotordrehzahlgrenzwert
- 204: Kennlinie für das Generatormoment
- 205: Verlauf der Leistung
- 211: Verlauf der Leistung
- 212: Kennlinie für die Rotordrehzahl
- 213: Kennlinie für das Generatormoment
- 221: Verlauf der Leistung
- 222: Kennlinie für die Rotordrehzahl
- 223: Kennlinie für das Generatormoment
- 231: Verlauf der Leistung
- 232: Kennlinie für die Rotordrehzahl
- 233: Kennlinie für das Generatormoment
- 311: Verlauf der Leistung außerhalb des Hysteresebereichs
- 312: Verlauf der Leistung im ersten und zweiten Bereich
- 313a: Verlauf der Leistung im dritten Bereich
- 313b: Verlauf der Leistung im dritten Bereich
- 313c: Verlauf der Leistung im vierten Bereich
- 314: Verlauf der Leistung außerhalb des Hysteresebereichs
- 321: windgeschwindigkeitsabhängiger Rotordrehzahlgrenzwert außerhalb des Hysteresebereichs
- 322a: Drehzahlkennlinie im ersten Teilbereich
- 322b: Drehzahlkennlinie im zweiten Teilbereich
- 323ab: Drehzahlkennlinie im dritten Teilbereich
- 323c: Drehzahlkennlinie im vierten Teilbereich
- 324: windgeschwindigkeitsabhängiger Rotordrehzahlgrenzwert außerhalb des Hysteresebereichs
- 325: Synchrondrehzahl
- 331: Verlauf des Generatormoments außerhalb des Hysteresebereichs
- 332a: Generatormomentkennlinie im ersten Bereich
- 332b: Generatormomentkennlinie im zweiten Bereich
- 333a: Generatormomentkennlinie im dritten Bereich
- 333b: Generatormomentkennlinie im dritten Bereich
- 333c: Generatormomentkennlinie im vierten Bereich
- 334: Verlauf des Generatormoments außerhalb des Hysteresebereichs

## Patentansprüche

1. Verfahren zum Betreiben einer Windenergieanlage (100), umfassend:
- Ermitteln eines Wertes einer Windgeschwindigkeit einer anströmenden Luftmasse an der Windenergieanlage (100);
- Vorgeben eines ersten Schwellenwerts (201) für die Windgeschwindigkeit in Abhängigkeit von einer Leistungsabgabe (205) der Windenergieanlage (100), wobei der erste Schwellenwert (201) geringer vorgegeben wird, wenn die Leistungsabgabe (205) höher ist;
- wenn der ermittelte Wert der Windgeschwindigkeit größer als der erster Schwellenwert (201) für die Windgeschwindigkeit ist:
- Verringern einer Drehzahl (212, 222, 232) eines Rotors (103) der Windenergieanlage, und
- Beibehalten oder Erhöhen eines auf den Rotor (103) wirkenden Generatormoments (213, 223, 233);
- wenn der ermittelte Wert der Windgeschwindigkeit größer als ein zweiter Schwellenwert (202) für die Windgeschwindigkeit ist, wobei der zweite Schwellenwert (202) größer als der erste Schwellenwert (201) ist:
- Verringern der Drehzahl (212, 222, 232) des Rotors (103), und
- Verringern des auf den Rotor wirkenden Generatormoments (213, 223, 233).

2. Verfahren nach Anspruch 1, umfassend:
- Vorgeben des zweiten Schwellenwerts (202) in Abhängigkeit von einer Leistungsabgabe (205) der Windenergieanlage (100).

3. Verfahren nach Anspruch 2, bei dem der zweite Schwellenwert (202) geringer vorgegeben wird, wenn die Leistungsabgabe (205) höher ist.

4. Verfahren nach einem der Ansprüche 1 bis 3, umfassend:
- wenn der ermittelte Wert der Windgeschwindigkeit zwischen dem ersten Schwellenwert (201) und dem zweiten Schwellenwert (202) liegt:
- kontinuierliches Verringern der Drehzahl (212, 222, 232) des Rotors (103) mit einem ersten Gradienten (203a).

5. Verfahren nach Anspruch 4, umfassend:
- wenn der ermittelte Wert der Windgeschwindigkeit größer ist als der zweite Schwellenwert (202):
- kontinuierliches Verringern der Drehzahl (212, 222, 232) des Rotors (103) mit einem zweiten Gradienten (203b), wobei eine Steigung des zweiten Gradienten (203b) geringer ist als eine Steigung des ersten Gradienten (203a).

6. Verfahren nach Anspruch 4 oder 5, umfassend:
- Vorgeben des ersten Gradienten (203a) und/oder des zweiten Gradienten (203b) in Abhängigkeit der ermittelten Windgeschwindigkeit.

7. Verfahren nach einem der Ansprüche 1 bis 6, umfassend:
- wenn sich in einem Drehzahlbereich um eine Synchrondrehzahl (325) der Windenergieanlage (100) der ermittelte Wert der Windgeschwindigkeit ausgehend von einem Wert größer als der zweite Schwellenwert (202) verringert:
- Erhöhen der Drehzahl (212, 222, 232) des Rotors (103), wobei das Erhöhen einen Verlauf (323ab, 323c) aufweist, der der zumindest abschnittsweise von einem Verlauf (322a, 322b) des Verringerns abweicht.

8. Verfahren nach einem der Ansprüche 1 bis 7, umfassend:
- wenn sich in einem Drehzahlbereich um eine Synchrondrehzahl (325) der Windenergieanlage (100) der ermittelte Wert der Windgeschwindigkeit ausgehend von einem Wert größer als der zweite Schwellenwert (202) verringert:
- Erhöhen des Generatormoments (213, 223, 233), wobei das Erhöhen einen Verlauf (333a, 333b, 333c) aufweist, der zumindest abschnittsweise von einem Verlauf (332a, 332b) des Verringerns abweicht.

9. Verfahren nach einem der Ansprüche 1 bis 8, bei dem das Ermitteln des Wertes der Windgeschwindigkeit umfasst:
- Ermitteln eines Mittelwerts der Werte der Windgeschwindigkeit in einem vorgegebenen Zeitraum.

10. Verfahren nach Anspruch 9, bei dem der Zeitraum kleiner vorgegebenen wird, wenn sich der Wert der Windgeschwindigkeit erhöht, als wenn sich der Wert der Windgeschwindigkeit verringert.

11. Vorrichtung für eine Windenergieanlage (100), die ausgebildet ist, ein Verfahren nach einem der Ansprüche 1 bis 10 auszuführen.

## Claims

1. A method for operating a wind turbine (100), comprising:
- determining a value of a wind speed of an incident air mass at the wind turbine (100);
- setting a first threshold value (201) in dependence on a power output (205) of the wind turbine (100), wherein the first threshold value (201) is set so as to be lower if the power output (205) is higher;
- if the determined value of the wind speed is greater than the first threshold value (201) for the wind speed:
- reducing a rotational speed (212, 222, 232) of a rotor (103) of the wind turbine, and
- maintaining or increasing a generator torque (213, 223, 233) acting upon the rotor (103);
- if the determined value of the wind speed is greater than a second threshold value (202) for the wind speed, the second threshold value (202) being greater than the first threshold value (201):
- reducing the rotational speed (212, 222, 232) of the rotor (103), and
- reducing the generator torque (213, 223, 233) acting upon the rotor.

2. The method according to claim 1, comprising:
- setting the second threshold value (202) in dependence on a power output (205) of the wind turbine (100).

3. The method according to claim 2, in which the second threshold value (202) is set so as to be lower if the power output (205) is higher.

4. The method according to any one of claims 1 to 3, comprising:
- if the determined value of the wind speed lies between the first threshold value (201) and the second threshold value (202) :
- continuously reducing the rotational speed (212, 222, 232) of the rotor (103) with a first gradient (203a).

5. The method according to claim 4, comprising:
- if the determined value of the wind speed is greater than the second threshold value (202):
- continuously reducing the rotational speed (212, 222, 232) of the rotor (103) with a second gradient (203b), a slope of the second gradient (203b) being less than a slope of the first gradient (203a).

6. The method according to claim 4 or 5, comprising:
- setting the first gradient (203a) and/or the second gradient (203b) in dependence on the determined wind speed.

7. The method according to any one of claims 1 to 6, comprising:
- if, in a rotational speed range around a synchronous rotational speed (325) of the wind turbine (100), the determined value of the wind speed decreases, starting from a value greater than the second threshold value (202):
- increasing the rotational speed (212, 222, 232) of the rotor (103), the increasing operation having a course (323ab, 323c) that differs, at least portionally, from a course (322a, 322b) of the reducing operation.

8. The method according to any one of claims 1 to 7, comprising:
- if, in a rotational speed range around a synchronous rotational speed (325) of the wind turbine (100), the determined value of the wind speed decreases, starting from a value greater than the second threshold value (202):
- increasing the generator torque (213, 223, 233), the increasing operation having a course (333a, 333b, 333c) that differs, at least portionally, from a course (332a, 332b) of the reducing operation.

9. The method according to any one of claims 1 to 8, in which the determining of the value of the wind speed comprises:
- determining a mean value of the values of the wind speed in a preset time period.

10. The method according to claim 9, in which the time period is preset so as to be shorter, if the value of the wind speed increases, than if the value of the wind speed decreases.

11. Device for a wind turbine (100), which is configured to execute a method according to any one of claims 1 to 10.

## Revendications

1. Procédé destiné au fonctionnement d'une éolienne (100), comprenant :
- la détermination d'une valeur d'une vitesse de vent d'une masse d'air affluante au niveau de l'éolienne (100) ;
- la spécification d'une première valeur seuil (201) pour la vitesse de vent en fonction d'une puissance délivrée (205) de l'éolienne (100), sachant que la première valeur seuil (201) est spécifiée pour être moins élevée lorsque la puissance délivrée (205) est plus élevée ;
- lorsque la valeur déterminée de la vitesse de vent est supérieure à la première valeur seuil (201) pour la vitesse de vent :
- la diminution d'une vitesse de rotation (212, 222, 232) d'un rotor (103) de l'éolienne, et
- le maintien ou l'augmentation d'un moment de générateur (213, 223, 233) agissant sur le rotor (103) ;
- lorsque la valeur déterminée de la vitesse de vent est supérieure à une deuxième valeur seuil (202) pour la vitesse de vent, sachant que la deuxième valeur seuil (202) est supérieure à la première valeur seuil (201) :
- la diminution de la vitesse de rotation (212, 222, 232) du rotor (103), et
- la diminution du moment de générateur (213, 223, 233) agissant sur le rotor.

2. Procédé selon la revendication 1, comprenant :
- la spécification de la deuxième valeur seuil (202) en fonction d'une puissance délivrée (205) de l'éolienne (100) .

3. Procédé selon la revendication 2, dans lequel la deuxième valeur seuil (202) est spécifiée à un niveau plus faible lorsque la puissance délivrée (205) est plus élevée.

4. Procédé selon l'une des revendications 1 à 3, comprenant :
- lorsque la valeur déterminée de la vitesse de vent est comprise entre la première valeur seuil (201) et la deuxième valeur seuil (202) :
- la diminution continue de la vitesse de rotation (212, 222, 232) du rotor (103) avec un premier gradient (203a).

5. Procédé selon la revendication 4, comprenant :
- lorsque la valeur déterminée de la vitesse de vent est supérieure à la deuxième valeur seuil (202) :
- la diminution continue de la vitesse de rotation (212, 222, 232) du rotor (103) avec un deuxième gradient (203b), sachant qu'une pente du deuxième gradient (203b) est plus faible qu'une pente du premier gradient (203a).

6. Procédé selon la revendication 4 ou 5, comprenant :
- la spécification du premier gradient (203a) et/ou du deuxième gradient (203b) en fonction de la vitesse de vent déterminée.

7. Procédé selon l'une des revendications 1 à 6, comprenant :
- lorsque, dans une plage de vitesse de rotation autour d'une vitesse de rotation synchrone (325) de l'éolienne (100), la valeur déterminée de la vitesse de vent diminue en partant d'une valeur supérieure à la deuxième valeur seuil (202) :
- l'augmentation de la vitesse de rotation (212, 222, 232) du rotor (103), sachant que l'augmentation présente une allure (323ab, 323c) qui diverge au moins par sections d'une allure (322a, 322b) de la diminution.

8. Procédé selon l'une des revendications 1 à 7, comprenant :
- lorsque, dans une plage de vitesse de rotation autour d'une vitesse de rotation synchrone (325) de l'éolienne (100), la valeur déterminée de la vitesse de vent diminue en partant d'une valeur supérieure à la deuxième valeur seuil (202) :
- l'augmentation du moment de générateur (213, 223, 233), sachant que l'augmentation présente une allure (333a, 333b, 333c) qui diverge au moins par sections d'une allure (332a, 332b) de la diminution.

9. Procédé selon l'une des revendications 1 à 8, dans lequel la détermination de la valeur de la vitesse de vent comprend :
- la détermination d'une valeur moyenne des valeurs de la vitesse de vent sur une période spécifiée.

10. Procédé selon la revendication 9, dans lequel la période est spécifiée comme étant moindre lorsque la valeur de la vitesse de vent augmente que lorsque la valeur de la vitesse de vent diminue.

11. Dispositif pour une éolienne (100), qui est configuré pour exécuter un procédé selon l'une des revendications 1 à 10.
